Europäisches Patentamt

European Patent Office

Office européen des brevets

(19)

(11) Veröffentlichungsnummer: **0 245 613**
**B1**

(12) **EUROPÄISCHE PATENTSCHRIFT**

(45) Veröffentlichungstag der Patentschrift: **16.08.90**

(51) Int. Cl.⁵: **B 60 K 15/077**

(21) Anmeldenummer: **87103880.8**

(22) Anmeldetag: **17.03.87**

(54) **Kraftstoffbehälter für Kraftfahrzeuge mit einem Einfüllstutzen.**

(30) Priorität: **14.05.86 DE 3616291**

(43) Veröffentlichungstag der Anmeldung:
**19.11.87 Patentblatt 87/47**

(45) Bekanntmachung des Hinweises auf die
Patenterteilung:
**16.08.90 Patentblatt 90/33**

(84) Benannte Vertragsstaaten:
**DE ES FR GB IT**

(56) Entgegenhaltungen:
**DE-A-2 208 189**
**DE-A-3 006 317**
**DE-B-2 353 448**
**FR-A-2 472 986**

(73) Patentinhaber: **Dr.Ing.h.c. F. Porsche
Aktiengesellschaft
Porschestrasse 42
D-7000 Stuttgart 40 (DE)**

(72) Erfinder: **Fischer, Roland
Jahnstrasse 13
D-8304 Mallersdorf (DE)**

EP 0 245 613 B1

Courier Press, Leamington Spa, England.

## Beschreibung

Die Erfindung bezieht sich auf einen Kraftstoffbehälter für Kraftfahrzeuge mit einem Einfüllstutzen, an dem ein Aufnahmeelement für eine Zapfpistole und ein endseitiger Einfüllkragen vorgesehen sind, wobei beim Betanken ein Zapfrohr der Zapfpistole abschnittsweise in den Einfüllstutzen hineinragt, gemäß FR—A1—2 472 986.

Bei einem anderen bekannten Kraftstoffbehälter der eingangs genannten Gattung (DE—A—22 08 189) weist der Einfüllstutzen über seine gesamte Längserstreckung einen etwa konstanten Querschnitt auf. Beim Betanken dieses Kraftstoffbehälters entsteht im Behälterinnenraum ein Überdruck. Wenn nun nach dem Abschalten der Zapfpistole die in Einfüllrichtung wirkende Energie durch die Zapfpistole nicht mehr vorhanden ist, wird der Druck im Inneren des Kraftstoffbehälters ausgeglichen, d.h., die Kraftstoffsäule wird durch den Einfüllstutzen hochgedrückt. Wegen der Querschnittsgestaltung des Einfüllstutzens hat die hochsteigende Kraftstoffsäule keine Möglichkeit, sich zu entspannen und wird deshalb mit relativ hoher Geschwindigkeit nach außen geschleudert, wodurch nicht nur Kraftstoff ins Freie austritt, sondern auch die betankende Person mit Kraftstoff bespritzt werden kann.

Aus der DE—B2—23 53 448 geht ein Kraftstoffbehälter mit einem Einfüllstutzen hervor, wobei am Einfüllstutzen unterhalb der Einstecktiefe der Zapfpistole ein Entmischungsraum ausgebildet ist, der einen vom Einfüllstutzenquerschnitt abweichenden Querschnitt aufweist. Dieser Entmischungsraum dient beim Betankungsvorgang zur Trennung der aus dem Einfüllstutzen nach oben strömenden Luft von dem dem Kraftstoffbehälter zufließenden Kraftstoff.

Auch dieser Anordnung haftet der Nachteil an, daß nach dem Abschalten der Zapfpistole Kraftstoff aus dem Einfüllstutzen herausspritzt, da keine Ausweichvorkehrungen für das hochgedrückte Kraftstoffvolumen getroffen sind; der Entmischungsraum ist bereits vor dem Abschalten der Zapfpistole vollständig mit Kraftstoff gefüllt.

Aufgabe der Erfindung ist es, einen Einfüllstutzen so auszubilden, daß ein Herausspritzen von Kraftstoff aus dem Einfüllstutzen nach dem Abschalten der Zapfpistole zuverlässig verhindert wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch den im Bereich des eingesteckten Zapfrohres am Einfüllstutzen ausgebildeten Entspannungsraum ein einwandfreies Vollbetanken des Kraftstoffbehälters gewährleistet ist. Der hochgedrückte Kraftstoff kann nach dem Abschalten der Zapfpistole zur Seite hin in den relativ großvolumigen Entspannungsraum ausweichen und sich dort entspannen. Dadurch wird ein Austreten von Kraftstoff ins Freie vermieden, was nicht nur die Forderung nach verbessertem Emissionsschutz erfüllt, sondern auch sicherstellt, daß die Kleidung der betankenden Person von Kraftstoffspritzern verschont bleibt. Außerdem ist der Einfüllstutzen mit dem Enmspannungsraum im Aufbau einfach und läßt sich konstengünstig herstellen.

Ein Ausführungsbeispiel der Erfindung ist in den Zeichnungen dargestellt und wird im folgenden näher beschrieben.

Es zeigt

Fig. 1 einen Kraftstoffbehälter mit einem Einfüllstuzten und dem erfindungsgemäßen Entspannungsraum,

Fig. 2 eine Ansicht in Pfeilrichtung R der Fig. 1.

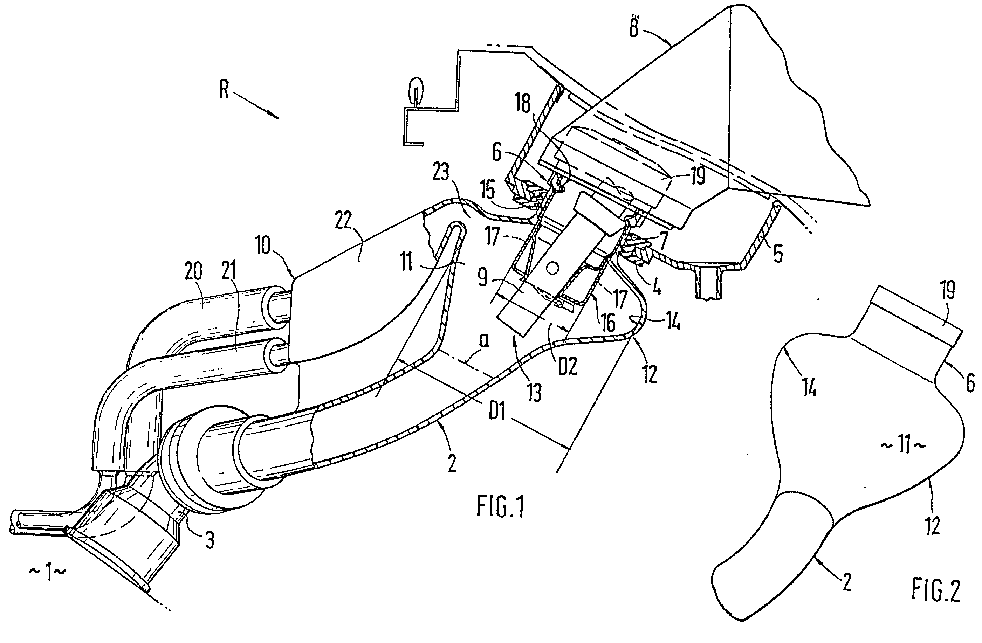

Fig. 1 zeigt einen oberen Teilbereich eines Kraftstoffbehälters 1 eines nicht näher dargestellten Kraftfahrzeuges mit einem Einfüllstutzen 2. Der Einfüllstutzen 2 ist einerseits mit einem Anschlußstutzen 3 des Kraftstoffbehälters 1 verbunden und andererseits unter Zwischenschaltung eines elastischen Dichtringes 4 an einem aufbauseitigen Aufnahmegehäuse 5 in Lage gehalten. Der Einfüllstutzen 2 weist im Bereich eines endseitigen Einfüllkragens 6 ein Aufnahmeelement 7 für eine Zapfpistole 8 auf, wobei beim Betanken ein Zapfrohr 9 der Zapfpistole 8 abschnittsweise in den Einfüllstutzen 2 hineinragt. Ferner wirkt der Einfüllstutzen 2 mit einer Entlüftungseinrichtung 10 zusammen, die außerhalb des Einfüllstutzens 2 verläuft.

Damit nach dem Abschalten der Zapfpistole 8 kein Kraftstoff mehr aus dem Einfüllstutzen 2 herausgespritzt wird, ist am Einfüllstutzen 2 im Bereich des eingesteckten Zapfrohres 9 ein Entspannungsraum 11 angeordnet, der durch eine Querschnittserweiterung 12 des Einfüllstutzens 2 gebildet wird. Der Entspannungsraum 11 ist einstückig mit dem Einfüllstutzen 2 ausgebildet und erstreckt sich im wesentlichen oberhalb eines freien Endes 13 des Zapfrohres 9.

Gemäß Fig. 1 beginnt der Entspannungsraum 11 kurz unterhalb des freien Endes 13 des Zapfrohres 8 etwa bei der strichpunktiert dargestellten Linie a und erweitert sich von hier aus trichterförmig nach oben hin, bis er schließlich nach einem radienförmigen Bereich 14 wieder auf den Querschnitt des Einfüllkragens 6 zurückgeführt ist. Die größte Breite der Querschnittserweiterung 12 ist etwa kreisförmig ausgebildet und verläuft konzentrisch zum Einfüllkragen 6. Der Entspannungsraum 11 endet unterhalb des Dichtringes 4 bzw. des Aufnahmegehäuses 5. Zwischen dem freien Ende 13 des Zapfrohres 8 und der Linie a ist der Einfüllstutzen so ausgebildet, daß beim Betanken keine Verwirbelungen in diesem Bereich auftreten.

Das zylindrisch ausgebildete Aufnahmeelement 7 ragt abschnittsweise in den Entspannungsraum 11 hinein, wobei sich ein oberer Abschnitt 15 des Aufnahmeelementes 7 an dem ihn umgebenden Einfüllstutzen 2 abstützt. Der Enspannungsraum 11 weist im Bereich des aus dem Einfüllkragen 6 herausragenden Abschnittes 16 des Aufnahmeelementes 7 seinen größten Querschnitt auf. Der größte Durchmesser D1 des Entspannungsraumes 11 ist dabei zumindest doppelt so groß wie der Durchmesser D2 des Einfüllstutzens 2 im Bereich des Einfüllkragens 6.

Die Entlüftungseinrichtung 10 mündet oberhalb des freien Endes 13 des Zapfrohres 9 in den Entspannungsraum 11 ein, und zwar vorzugsweise im Bereich seines größten Durchmessers D1. Am Abschnitt 16 des Aufnahmeelementes 7 sind radiale Öffnungen 17 vorgesehen, durch die die von der Entlüftungseinrichtung 10 ankommende Luft über das Aufnahmeelement 7 hindurch nach außen abströmen kann. Der Einfüllstutzen 2, der Entspannungsraum 11 und zumindest ein Teil der Entlüftungseinrichtung 10 werden durch ein einstückiges Bauteil aus Kunststoff gebildet, das im Blasverfahren hergestellt ist.

Das in den Einfüllstutzen eingesetzte Aufnahmeelement 7 dient zum Abstützen der Zapfpistole 8 und weist ferner innenseitig einen Gewindegang 18 auf, der mit einem nicht dargestellten Außengewinde eines Verschlußdeckels 19 zusammenwirkt. Der Einfüllstutzen 2 weist unterhalb des Entspannungsraumes 11 bis zum Anschlußstutzen 3 einen solchen Querschnitt auf, daß lediglich Kraftstoff in den Kraftstoffbehälter 1 hineinströmen kann, jedoch keine Luft über den Einfüllstutzen 2 aus diesem austreten kann.

Der Luftaustritt aus dem Kraftstoffbehälter 1 erfolgt ausschließlich über die Entlüftungseinrichtung 10, die sich aus Entlüftungsleitungen 20, 21 und einem Ausgleichsraum 22 zusammensetzt. Der Ausgleichsraum 22 ist über eine Öffnung 23 an den Entspannungsraum 11 angeschlossen und oberhalb der Entlüftungsleitungen 20, 21 angeordnet.

Nach Fig. 1 ist die Unterseite des Aufnahmeelementes mit einer schwenkbaren, federbelasteten Klappe 24 versehen, die beim Einführen des Zapfrohres 9 nach unten hin in eine nicht dargestellte Freigabestellung bewegt wird.

Die Größe des Volumens des Entspannungsraumes 11 muß empirisch ermittelt werden und richtet sich nach der geometrischen Lage des Kraftstoffbehälters 1 und des Einfüllstutzens 2, wobei bei einem relativ flach verlaufenden Einfüllstutzen ein größeres Volumen erforderlich ist als bei einem annähernd vertikal verlaufenden Einfüllstutzen 2.

Der Entspannungsraum 11 hat folgende Funktion: Der Kraftstoffbehälter 1 und der Einfüllstutzen 2 werden bis zum Abschalten der Zapfpistole 8 mit Kraftstoff befüllt. Danach erfolgt im Kraftstoffbehälter 1 ein Druckausgleich und der Kraftstoff wird im Einfüllstutzen 2 hochgedrückt. Durch den großvolumigen Entspannungsraum 11 kann der Kraftstoff zur Seite hin ausweichen und sich dort entspannen, so daß ein Herausspritzen von Kraftstoff vermieden wird.

**Patentansprüche**

1. Kraftstoffbehälter für Kraftfahrzeuge mit einem Einfüllstutzen (2), an dem ein Aufnahmeelement (7) für eine Zapfpistole (8) und endseitig ein Einfüllkragen (6) vorgesehen sind, wobei beim Betanken ein Zapfrohr (9) der Zapfpistole (8) abschnittsweise in den Einfüllstutzen (2) hineinragt, dadurch gekennzeichnet, daß am Einfüllstutzen (2) angrenzend an den endseitigen Einfüllkragen (6) ein durch eine radiale Querschnittserweiterung des Einfüllstutzens (2) gebildeter, relativ großvolumiger Entspannungsraum (11) für den hochgedrückten Kraftstoff vorgesehen ist, der etwa konzentrisch zum Einfüllkragen (6) verläuft, wobei sich der Entspannungsraum (11)—im Querschnitt gesehen—von einem unterhalb des freien Endes des eingesteckten Zapfrohres (9) liegenden Bereich trichterförmig nach oben hin erweitert, ehe er vor dem Einfüllkragen (6) wieder auf dessen Querschnitt zurückgeführt ist.

2. Kraftstoffbehälter nach Anspruch 1, dadurch gekennzeichnet, daß ein zylindrisch ausgebildetes Aufnahmeelement (7) für die Zapfpistole abschnittsweise in den Entspannungsraum (11) hineinragt.

3. Kraftstoffbehälter nach den Ansprüchen 1 und 2, dadurch gekennzeichnet, daß der Entspannungsraum (11) im Bereich des aus dem Einfüllkragen (6) herausragenden Abschnittes (16) des Aufnahmeelementes (7) seinen größten Querschnitt aufweist.

4. Kraftstoffbehälter nach Anspruch 1, bei dem außerhalb des Einfüllstutzens eine Entlüftungseinrichtung vorgesehen ist, die mit dem Einfüllstutzen in Verbindung steht, dadurch gekennzeichnet, daß die Entlüftungseinrichtung (10) in den Entspannungsraum (11) einmündet.

5. Kraftstoffbehälter nach Anspruch 4, dadurch gekennzeichnet, daß die Entlüftungseinrichtung (10) im Bereich des größten Querschnitts des Entspannungsraumes (11) in diesen einmündet.

6. Kraftstoffbehälter nach Anspruch 2, dadurch gekennzeichnet, daß an dem aus dem Einfüllkragen (6) herausragenden Abschnitt (16) des Aufnahmeelementes radiale Öffnungen (17) vorgesehen sind.

7. Kraftstoffbehälter nach Anspruch 1, dadurch gekennzeichnet, daß der Entspannungsraum (11) einstückig mit dem Einfüllstutzen (2) ausgebildet ist.

8. Kraftstoffbehälter nach den Ansprüchen 1 und 4, dadurch gekennzeichnet, daß der Einfüllstutzen (2), der Entspannungsraum (11) und zumindest ein Teil der Entlüftungseinrichtung (10) durch ein einstückiges Bauteil aus Kunststoff gebildet wird, das im Blasverfahren hergestellt ist.

9. Kraftstoffbehälter nach Anspruch 1, dadurch gekennzeichnet, daß die größte Breite der Querschnittserweiterung (12) etwa kreisförmig ausgebildet ist und konzentrisch zum Einfüllkragen (6) verläuft.

10. Kraftstoffbehälter nach Anspruch 1, dadurch gekennzeichnet, daß der größte Durchmesser (D1) des Entspannungsraums (11) zumindest doppelt so groß ist wie ein Durchmesser (D2) des Einfüllstutzens im Bereich des Einfüllkragens (6).

## Revendications

1. Réservoir de carburant pour des véhicules à moteur, comportant un embout de remplissage (2), sur lequel on prévoit un élément récepteur (7) pour un pistolet distributeur (8) et un collet de remplissage (6) du côté de l'extrémité, un bec (9) du pistolet distributeur (8) s'avançant partiellement dans l'embout de remplissage (2) lors du ravitaillement en carburant, caractérisé en ce qu'on prévoit sur l'embout de remplissage (2), adjacent au collet de remplissage (6) du côté extrémité, une chambre de détente (11) de volume relativement grand, formée par un élargissement radial de la section transversale de l'embout de remplissage (2), pour le carburant refoulé vers le haut, laquelle est sensiblement concentrique au collet de remplissage (6), la chambre de détente (11)—vue en coupe transversale—s'élargissant en forme d'entonnoir vers le haut à partir d'une zone située en dessous de l'extrémité libre du bec du pistolet (9) qui y est enfoncé, avant de revenir à la section transversale du collet de remplissage (6) en avant de celui-ci.

2. Réservoir de carburant selon la revendication 1, caractérisé en ce qu'un élément récepteur (7), de forme cylindrique, pour le pistolet distributeur, s'avance partiellement dans la chambre de détente (11).

3. Réservoir de carburant selon les revendications 1 et 2, caractérisé en ce que la chambre de détente (11) a sa plus grande section transversale dans la zone de la portion (16) de l'élément récepteur (7) sortant du collet de remplissage (6).

4. Réservoir de carburant selon la revendication 1, dans lequel on prévoit à l'extérieur de l'embout de remplissage un dispositif de mise à l'aire libre relié à l'embout de remplissage, caractérisé en ce que le dispositif de mise à l'aire libre (10) débouche dans la chambre de détente (11).

5. Réservoir de carburant selon la revendication 4, caractérisé en ce que le dispositif de mise à l'air libre (10) débouche dans la chambre de détente (11), dans la zone de plus grande section transversale de celle-ci.

6. Réservoir de carburant selon la revendication 2, caractérisé en ce qu'on prévoit des ouvertures radiales (17) sur la portion (16) de l'élément récepteur sortant du collet de remplissage (6).

7. Réservoir de carburant selon la revendication 2, caractérisé en ce que la chambre de détente (11) est réalisée d'une seule pièce avec l'embout de remplissage (2).

8. Réservoir de carburant selon les revendications 1 et 4, caractérisé en ce que l'embout de remplissage (2), la chambre de détente (11) et au moins une partie du dispositif de mise à l'air libre (10) sont constitués par un élément d'une seule pièce en matière plastique, qui est fabriquée par soufflage.

9. Réservoir de carburant selon la revendication 1, caractérisé en ce que la plus grande largeur de l'élargissement de section transversale (12) a une forme sensiblement circulaire et est concentrique au collet de remplissage (6).

10. Réservoir de carburant selon la revendication 1, caractérisé en ce que le plus grand diamètre (D1) de la chambre de détente (11) est au moins le double d'un diamètre (D2) de l'embout de remplissage dans la zone du collet de remplissage (6).

## Claims

1. A fuel tank for motor vehicles with a filling pipe (2), on which are provided a receiving element (7) for a hose nozzle (8) and a filling collar (6) at the end, a pipe (9) of the hose nozzle (8) projecting partially into the filling pipe (2) during refuelling, characterized in that an expansion chamber (11) for the highly compressed fuel is provided on the filling pipe (2) adjacent to the filling collar (6) at the end, the expansion chamber (11) being of relatively large volume and being formed by a radial cross-sectional enlargement of the filling pipe (2) and extending approximately concentrically with the filling collar (6) and, as viewed in cross-section, being enlarged upwards in the manner of a funnel from an area situated below the free end of the inserted hose pipe (9) before returning in front of the filling collar (6) to the cross-section thereof.

2. A fuel tank according to Claim 1, characterized in that a cylindrically constructed receiving element (7) for the hose nozzle projects partially into the expansion chamber (11).

3. A fuel tank according to Claims 1 and 2, characterized in that the expansion chamber (11) has its greatest cross-section in the region of the portion (16) of the receiving element (7) projecting out of the filling collar (6).

4. A fuel tank according to Claim 1, in which a venting device connected to the filling pipe is provided outside the filling pipe, characterized in that the venting device (10) opens into the expansion chamber (11).

5. A fuel tank according to Claim 4, characterized in that the venting device (10) opens into the expansion chamber (11) in the region of the greatest cross-section thereof.

6. A fuel tank according to Claim 2, characterized in that radial openings (17) are provided on the portion (16) of the receiving element projecting out of the filling collar (6).

7. A fuel tank according to Claim 1, characterized in that the expansion chamber (11) is constructed in one piece with the filling pipe (2).

8. A fuel tank according to Claims 1 and 4, characterized in that the filling pipe (2), the expansion chamber (11) and at least part of the venting device (10) are formed by a one-piece component of plastics material produced by blow moulding.

9. A fuel tank according to Claim 1, characterized in that the greatest width of the cross-sectional enlargement (12) is made approximately circular and extends concentrically with the filling collar (6).

10. A fuel tank according to Claim 1, characterized in that the greatest diameter (D1) of the expansion chamber (11) is at least twice as great as one diameter (D2) of the filling pipe in the region of the filling collar (6).

FIG.1

FIG.2

~1~

~11~

EP 0 245 613 B1